# EUROPÄISCHE PATENTSCHRIFT

(11) **EP 2 044 283 B1**
(45) Veröffentlichungstag und Bekanntmachung des Hinweises auf die Patenterteilung: **24.04.2013**
(21) Anmeldenummer: 07765502.5
(22) Anmeldetag: 19.06.2007
(51) Int. Cl.: H02H 7/085

(54) **VERFAHREN UND VORRICHTUNG ZUM SCHUTZ GEGEN EINKLEMMEN BEI EINEM MOTORBETRIEBENEN SCHLIESSSYSTEM**
METHOD AND DEVICE FOR PROTECTION AGAINST JAMMING IN A MOTOR-DRIVEN LOCKING SYSTEM
PROCÉDÉ ET DISPOSITIF DE PROTECTION CONTRE LE COINCEMENT SUR UN SYSTÈME DE FERMETURE À MOTEUR

(30) Priorität: 17.07.2006 DE 102006033022
(43) Veröffentlichungstag der Anmeldung: 08.04.2009
(73) Patentinhaber: Robert Bosch GmbH, 70442 Stuttgart (DE)
(72) Erfinder: LAMM, Hubert, 77876 Kappelrodeck (DE)
(86) Internationale Anmeldenummer: PCT/EP2007/056094
(87) Internationale Veröffentlichungsnummer: WO 2008/009531

(56) Entgegenhaltungen:
- GB-A- 2 267 161
- US-A- 5 539 290
- US-A1- 2004 257 010

## Beschreibung

### Stand der Technik

Die vorliegende Erfindung betrifft ein Verfahren und eine Vorrichtung zum Schutz gegen ein Einklemmen bei einem motorbetriebenen Schließsystem, wie z.B. bei motorbetriebenen Schiebedächern oder Fensterhebern von Fahrzeugen.

Verfahren zum Schutz gegen Einklemmen bei motorbetriebenen Schließsystemen sind aus dem Stand der Technik in unterschiedlichen Ausgestaltungen bekannt. Um eine Gefährdung von Personen oder eine Beschädigung von Objekten zu vermeiden, müssen derartige Systeme über einen Einklemmschutz verfügen. Hierzu muss eine Einklemmsituation zuverlässig erkannt werden.

Zum Erkennen einer Einklemmsituation wird üblicherweise ein antreibender Elektromotor überwacht. Wenn eine vorbestimmte Klemmkraft eine Motordrehzahl des Antriebs reduziert, wird eine Einklemmsituation erfasst und die Antriebsrichtung des Motors umgekehrt. Dadurch wird ein Reversieren des Schließvorgangs durchgeführt. Aufgrund gesetzlicher Vorschriften erfolgt die Messung der Klemmkraft üblicherweise mit Federraten von 10 N/mm, 20 N/mm und 65 N/mm. Allerdings erfordert insbesondere die harte Federrate von 65 N/mm unterschiedliche Anforderungen als die weicheren Federraten. Von daher sind in der Praxis üblicherweise in einem Speicher zwei unterschiedliche Algorithmen implementiert, um eine Einklemmsituation bei den weichen und der harten Federrate zu erfassen.

In der Praxis kommt es jedoch immer wieder vor, dass aufgrund von mechanischen Problemen, insbesondere erhöhte Reibung an Übergangsstellen am Schiebedach oder am Fenster, ein Drehzahlverlauf beim Antrieb auftritt, welcher einem Verlauf einer Einklemmsituation mit der harten Federrate entspricht. Dadurch wird das System fälschlicherweise aufgrund der mechanischen Probleme reversiert, obwohl keine Einklemmsituation vorliegt. Zwar weisen moderne Schließsysteme einen Adaptionsalgorithmus auf, um während eines Schließvorgangs eine automatische Adaption von Schwergängigkeiten zu ermöglichen und somit den Schließvorgang fortzusetzen, allerdings kann der Adaptionsalgorithmus bei der harten Federrate nicht schnell genug reagieren. Dadurch ist es nicht möglich, mit dem vorhandenen Adaptionsalgorithmus die Schwergängigkeit an dieser Stelle zu kompensieren. Ferner wird bei den bekannten Adaptionsalgorithmen die notwendige Information meist nur über mehrere Stützstellen entlang des gesamten Verfahrweges des Schließsystems gespeichert und über die Stützstellen gemittelt, so dass gewisse Ungenauigkeiten vorhanden sind.

US 5539290 offenbart ein Verfahren zum Schutz gegen Einklemmen.

### Vorteile der Erfindung

Das erfindungsgemäße Verfahren zum Schutz gegen Einklemmen bei einem motorbetriebenen Schließsystem mit den Merkmalen des Patentanspruchs 1 weist demgegenüber den Vorteil auf, dass es lediglich eine partielle Adaption an problematischen Stellen während des Schließvorgangs vornimmt. Hierdurch kann insbesondere ein notwendiger Speicherbedarf für eine Speicherung von Motorwerten während eines Schließvorgangs reduziert werden. Es muss somit nicht mehr ein großer Speicher zum Speichern eines durchgängigen Schließbereiches von Anfang bis Ende vorgehalten werden, um eventuelle einmal auftretende Problemstellen zu adaptieren. Dies wird erfindungsgemäß dadurch erreicht, dass bei einem motorbetriebenen Schließen zuerst eine erste Schwergängigkeit während des Schließvorgangs erkannt wird. Aufgrund dieser Schwergängigkeit wird der Schließvorgang umgekehrt, um sicherzustellen, dass ein Einklemmen nicht vorliegt. Dabei werden Werte für die Position der Schwergängigkeit und die Amplitude einer Drehzahländerung des Antriebs gespeichert. Weiter wird noch ein Zählerwert eines Zählers um 1 erhöht. Der Zählerwert ist hierbei üblicherweise während des ersten Schließvorgangs bei Null. Anschließend wird ein nochmaliger Schließvorgang gestartet. Wenn beim nochmaligen Schließen eine zweite Schwergängigkeit erkannt wird, wird ein Vergleich der Position der ersten Schwergängigkeit mit der Position der zweiten Schwergängigkeit durchgeführt. Wenn die Positionen der ersten und zweiten Schwergängigkeit gleich sind, wird ein Vergleich des Zählerwert mit einem vorgegebenen Wert durchgeführt. Wenn der Zählerwert gleich dem vorgegebenen Wert ist, wird durch partielles Kompensieren der Schwergängigkeitsstelle der Schließvorgang fortgeführt. Der Zähler erfasst somit die Auftretenshäufigkeit an einer Position und aktiviert nach einer vorbestimmten Anzahl des Reversierens den gespeicherten Kompensationswert an dieser Stelle. Um auszuschließen, dass nicht sofort beim ersten Auftreten einer Schwergängigkeit der Kompensationswert aktiviert wird, muss der vorgegebene Zählerwert wenigstens 1 sein. Somit stellt die vorliegende Erfindung sicher, dass ein Schließvorgang fortgesetzt werden kann, wenn keine Einklemmsituation vorliegt, welche mit den bisherigen Adaptionsalgorithmen nicht durchgeführt werden kann.

Die Unteransprüche zeigen bevorzugte Weiterbildungen der Erfindung.

Vorzugsweise wird das Verfahren bei einer Schwergängigkeit mit einer hohen Federrate, insbesondere einer Federrate von 65 N/mm, durchgeführt. Es sei jedoch angemerkt, dass das Verfahren auch bei den geringeren Federraten vorgesehen sein kann.

Weiter bevorzugt wird eine gespeicherte Position und ein Amplitudenwert einer Drehzahländerung der ersten Schwergängigkeit gelöscht, wenn bei einem nachfolgenden Schließvorgang an der Position der ersten Schwergängigkeit keine Schwergängigkeit mehr auftritt. Hierdurch wird sichergestellt, dass das Verfahren nicht unnötigerweise Speicherplatz belegt. Es sei angemerkt, dass es auch vorgesehen sein kann, dass, wenn ein Schließvorgang ohne Störung durchgeführt worden ist, sämtliche gespeicherten Werte für die partielle Adaption gelöscht werden können. Hierdurch kann ein erforderlicher Speicherbedarf erheblich reduziert werden und der vorgeschaltete Kraftüberschuss wieder gelöscht werden.

Alternativ kann vorzugsweise auch die Position und der Kompensationswert im Speicher verbleiben und bei einem neuen Schließvorgang bei einem Auftreten einer Schwergängigkeit an der gleichen Position wie die erste Schwergängigkeit, der Kompensationswert ausgegeben werden und die Schwergängigkeit so kompensiert werden.

Um insbesondere auf verschiedene Wünsche von unterschiedlichen Fahrzeugherstellern eingehen zu können, ist das Verfahren vorzugsweise durch ein externes Signal aktivierbar oder deaktivierbar. So ist es beispielsweise möglich, das Verfahren üblicherweise deaktiviert zu lassen und lediglich in einem auftretenden Problemfall, in welchem sich der Schließvorgang nicht mehr durchführen lässt, obwohl keine Einklemmsituation vorliegt, das Verfahren zu aktivieren. Dies kann beispielsweise in einer Werkstatt erfolgen.

Das erfindungsgemäße Verfahren zum Schutz gegen Einklemmen bei einem Schließsystem wird von einer Vorrichtung ausgeführt, die einen Motor, eine Erkennungseinheit, eine Steuereinheit, einen Speicher und einen Zähler umfasst. Die Steuereinheit führt dabei die Speicherung der Kompensationswerte bei Auftreten einer Schwergängigkeit durch, setzt einen Zählerwert um 1 nach oben und vergleicht den aktuellen Zählerwert des Zählers mit einem vorgegebenen Zählerwert. Ferner aktiviert die Steuereinheit dann gegebenenfalls den Kompensationswert.

### Zeichnung

Nachfolgend wird ein Ausführungsbeispiel der vorliegenden Erfindung anhand der begleitenden Zeichnung im Detail beschrieben. In der Zeichnung ist:
- Figur 1: ein Diagramm, welches eine Drehzahl eines Antriebs für ein Schiebedach über einen zurückgelegten Weg zeigt, und
- Figur 2: eine vergrößerte Teilansicht des Diagramms von Figur 1 mit einer Stelle, an welcher eine Schwergängigkeit beim Schließvorgang auftritt.

### Beschreibung einer bevorzugten Ausführungsform der Erfindung

Nachfolgend wird unter Bezugnahme auf die Figuren ein bevorzugtes Ausführungsbeispiel der Erfindung im Detail beschrieben.

Das erfindungsgemäße Verfahren zum Schutz gegen Einklemmen wird anhand eines Schiebedachs eines Fahrzeugs näher erläutert. Das erfindungsgemäße Verfahren kann jedoch auch beispielsweise bei elektrischen Fensterhebern oder anderen motorisch betriebenen Schließsystemen verwendet werden.

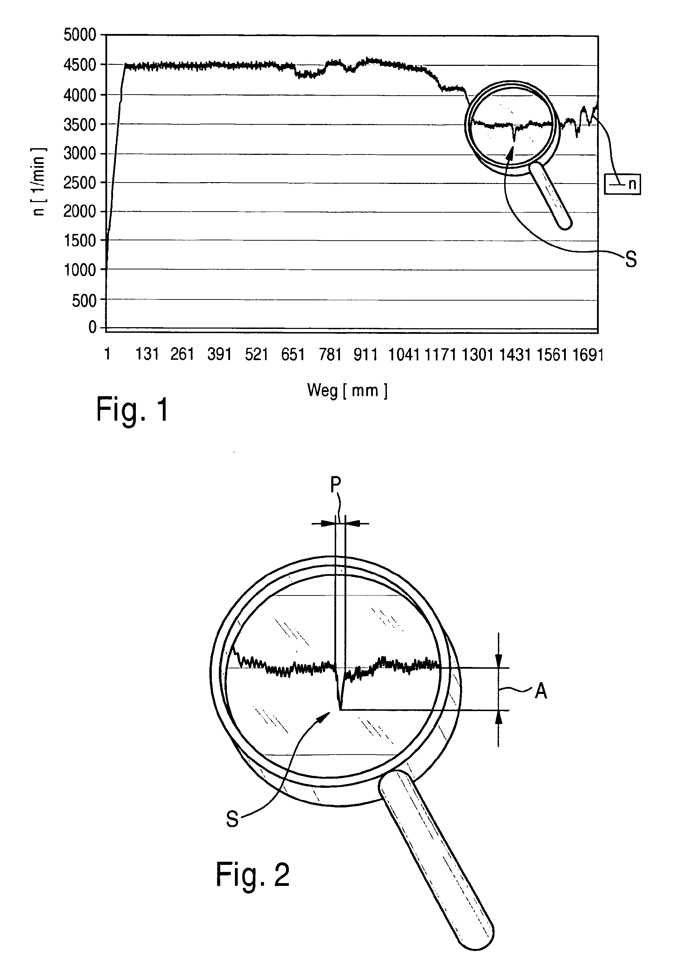

Figur 1 zeigt einen Verlauf einer Drehzahl eines Elektromotors, welcher als Antrieb für das Schiebedach dient. Figur 2 zeigt einen vergrößerten Ausschnitt dieses Drehzahlverlaufs, wobei eine Stelle, an welcher das Dach reversiert, vergrößert dargestellt ist.

Wie aus Figur 1 ersichtlich ist, geht nach dem Start des Schließvorgangs die Drehzahl des Antriebs auf ca. 4500 U/min. Über einen langen Bereich bleibt diese Drehzahl dabei im Wesentlichen konstant, wobei sie, je näher das Ende des Schließvorgangs kommt, auf einen Wert von ca. 3500 U/min absinkt. Hierbei tritt nun eine Schwergängigkeitsstelle S auf. An dieser Schwergängigkeitsstelle S reversiert das Schiebedach und öffnet wieder. Obwohl an dieser Schwergängigkeitsstelle S keine Einklemmsituation vorlag, wird das Schiebedach wieder geöffnet, da aufgrund der abrupten Drehzahländerung des Antriebs theoretisch die Möglichkeit einer Einklemmsituation vorgelegen haben könnte. Diese eventuelle Einklemmsituation wird mit den bekannten Einrichtungen, wie beispielsweise einer Drehzahlüberwachung des Motors, einer Überwachung einer Stromaufnahme des Motors usw. durchgeführt. Gleichzeitig wird ein Zählerwert eines Zählers um 1 erhöht.

Nachdem die Antriebsrichtung umgekehrt wurde und das Schiebedach wieder geöffnet wurde, wird der Schließvorgang nochmals durchgeführt. Wenn die Erkennungseinrichtung keine weitere Schwergängigkeit erkennt, wird das Schiebedach normal geschlossen. Wenn die Schwergängigkeit jedoch auf einer mechanischen Gegebenheit, insbesondere an Übergangsstellen am Schiebedach lag, wird beim zweiten Schließvorgang eine zweite Schwergängigkeit üblicherweise nochmals an der gleichen Position auftreten. Das System erkennt die zweite Schwergängigkeit und eine Steuereinrichtung vergleicht die Position der ersten Schwergängigkeit mit der Position der zweiten Schwergängigkeit. In Figur 2 ist die Position der Schwergängigkeit ein Bereich P, welcher mehrere Millimeter breit ist. Es sei angemerkt, dass bei dem Vergleich auch gewisse Toleranzen am Beginn bzw. am Ende des Positionsbcreichs P beachtet werden können. D.h., wenn beispielsweise der Bereich zwischen 1450 mm und 1460 mm liegt, kann für den Vergleich eine Toleranz von ±2 mm für die Grenzwerte vorgesehen werden, so dass beim Auftreten der zweiten Schwerfälligkeit ein Vergleich positiv ist, wenn der Positionsbereich der zweiten Schwerfälligkeit z.B. zwischen 1448 mm und 1462 mm liegt.

Wenn die Position der ersten und zweiten Schwergängigkeit gleich ist, vergleicht die Steuereinheit im nächsten Schritt einen Zählerwert des Zählers mit einem vorgegebenen Wert. Vorzugsweise war der ursprüngliche Zählerwert Null und durch das Erhöhen des Zählerwerts um 1 ist der aktuelle Zählerwert nun 1. Dabei ist weiterhin vorzugsweise der vorgegebene Wert ebenfalls 1, um zu vermeiden, dass ein zweimaliges oder häufigeres Reversieren des Schiebedachs an der Schwergängigkeitsstelle S notwendig ist. Hierbei kann mit einer gewissen Wahrscheinlichkeit ausgeschlossen werden, dass eine Einklemmsituation vorliegt, da dies für den gleichen Bereich relativ unwahrscheinlich ist.

Wenn der aktuelle Zählerwert des Zählers gleich dem vorgegebenen Zählerwert ist, wird die Schwergängigkeitsstelle S durch einen Kompensationswert ausgeglichen. Der Kompensationswert wird anhand der Amplitude A der Schwergängigkeitsstelle S bestimmt. Ein Wert der Amplitude A dieses Ausführungsbeispiels ist ca. 200 U/min.

Die in den Figuren 1 und 2 dargestellte Schwergängigkeitsstelle S entspricht einer Einklemmsituation für eine Federrate von 65 N/mm². Aufgrund der schnellen Drehzahländerung kann der vorhandene Adaptionsalgorithmus zur automatischen Adaption von Schwergängigkeiten nicht aktiviert werden. Auch ist die Amplitude A im Bereich der Schwergängigkeit zu klein, um durch den normalen Adaptionsalgorithmus kompensiert zu werden. Von daher greift das erfindungsgemäße Verfahren ein und führt eine partielle Adaption der Schwergängigkeitsstelle S durch. Da für die partielle Adaption nur wenige Werte, insbesondere die Position P, die Amplitude A und ein Zählerwert gespeichert werden müssen, ist der notwendige Speicherplatz sehr gering.

Das erfindungsgemäße Verfahren kann derart ausgelegt werden, dass es lediglich möglich ist, nur eine Position zu kompensieren. Hierdurch wird insbesondere der Speicherplatz minimal gehalten. Sollte es jedoch gewünscht sein, dass mehrere Positionen kompensiert werden können, muss gegebenenfalls ein Speicherplatz für mehrere Schwergängigkeitsstellen vorgehalten werden.

## Patentansprüche

1. Verfahren zum Schutz gegen Einklemmen bei einem motorbetriebenen Schließsystem, umfassend die Schritte:
- Starten und Durchführen des Schließvorgangs,
- Erkennen einer ersten Schwergängigkeit während des Schließvorgangs,
- Reversieren der Antriebsrichtung,
- Speichern eines Positionswerts der Position der ersten Schwergängigkeit und eines Amplitudenwerts der ersten Schwergängigkeit,
- Erhöhen eines Zählerwerts eines Zählers,
- nochmaliges Durchführen des Schließvorgangs,
- Erkennen einer zweiten Schwergängigkeit und Erfassen eines Positionswerts und eines Amplitudenwerts der zweiten Schwergängigkeit,
- Vergleichen des Positionswerts der ersten Schwergängigkeit mit dem Positionswert der zweiten Schwergängigkeit,
- Vergleichen des aktuellen Zählerwerts mit einem vorgegebenen Wert, wenn der Positionsvergleich der Positionen der ersten und zweiten Schwergängigkeit ergeben hat, dass die Positionen gleich sind, und
- Fortführen des Schließvorgangs, wenn der Zählerwert gleich dem vorgegebenen Wert ist, wobei die erkannte Schwergängigkeitsstelle durch partielles Kompensieren mittels eines Kompensationswerts, basierend auf dem Amplitudenwert (A) kompensiert wird.

2. Verfahren nach Anspruch 1, **dadurch gekennzeichnet, dass** das Verfahren bei Auftreten einer Schwergängigkeit mit einer hohen Federrate, insbesondere näherungsweise 65 N/mm, durchgeführt wird.

3. Verfahren nach einem der vorhergehenden Ansprüche, **gekennzeichnet durch** ein Löschen der gespeicherten Werte der Position und der Amplitude der ersten Schwergängigkeit, wenn bei einem neuen Schließvorgang an der Position der ersten Schwergängigkeit keine Schwergängigkeit mehr auftritt.

4. Verfahren nach Anspruch 1 oder 2, **gekennzeichnet durch** ein sofortiges Kompensieren einer Schwergängigkeit mit dem Kompensationswert, wenn bei einem neuen Schließvorgang an der Position der ersten Schwergängigkeit wieder eine Schwergängigkeit auftritt.

5. Verfahren nach einem der vorhergehenden Ansprüche, **dadurch gekennzeichnet, dass** das Verfahren durch ein externes Signal aktivierbar oder deaktivierbar ist.

6. Vorrichtung zum Schutz gegen Einklemmsituationen, umfassend einen Motor, eine Erkennungseinheit zur Erkennung einer Einklemmsituation, eine Steuereinheit und einen Zähler, wobei die Vorrichtung eingerichtet ist zur Ausführung des Verfahrens nach einem der vorhergehenden Ansprüche.

## Claims

1. Method for protecting against trapping in a motor-driven locking system, comprising the steps:
- starting and carrying out the closing process,
- detecting a first difficulty of movement during the closing process,
- reversing the drive direction,
- storing a position value of the position of the first difficulty of movement and an amplitude value of the first difficulty of movement,
- increasing a counter value of a counter,
- carrying out the closing process once more,
- detecting a second difficulty of movement and recording a position value and an amplitude value of the second difficulty of movement,
- comparing the position value of the first difficultly of movement with the position value of the second difficulty of movement,
- comparing the current counter value with a predefined value if the position comparison of the positions of the first and second difficulties of movement has revealed that the positions are the same, and
- carrying on the closing process if the counter value is equal to the predefined value, wherein the detected location of the difficulty of movement is compensated by means of partial compensation using a compensation value, on the basis of the amplitude value (A).

2. Method according to Claim 1, **characterized in that** when a difficulty of movement occurs the method is carried out with a high spring constant, in particular approximately 65 N/mm.

3. Method according to one of the preceding claims, **characterized by** deletion of the stored values of the position and of the amplitude of the first difficulty of movement if no difficulty of movement occurs any more at the position of the first difficulty of movement during a new closing process.

4. Method according to Claim 1 or 2, **characterized by** immediate compensation of a difficulty of movement with the compensation value if a difficulty of movement occurs again at the position of the first difficulty of movement during a new closing process.

5. Method according to one of the preceding claims, **characterized in that** the method can be activated or deactivated by means of an external signal.

6. Device for protecting against trapping situations, comprising a motor, a detection unit for detecting a trapping situation, a control unit and a counter, wherein the device is designed to carry out the method according to one of the preceding claims.

## Revendications

1. Procédé de protection contre l'écrasement par un système de fermeture motorisé, comprenant les étapes suivantes :
- début de l'exécution de l'opération de fermeture,
- détection d'une première difficulté de mouvement pendant l'opération de fermeture,
- inversion du sens de l'entraînement,
- mémorisation d'une valeur de position de la position de la première difficulté de mouvement et d'une valeur d'amplitude de la première difficulté de mouvement,
- incrémentation de la valeur de comptage d'un compteur,
- nouvelle exécution de l'opération de fermeture,
- détection d'une deuxième difficulté de mouvement et acquisition d'une valeur de position et d'une valeur d'amplitude de la deuxième difficulté de mouvement,
- comparaison de la valeur de position de la première difficulté de mouvement et avec la valeur de position de la deuxième difficulté de mouvement,
- comparaison de la valeur de comptage actuelle avec une valeur prédéfinie lorsque la comparaison de position des positions de la première et de la deuxième difficulté de mouvement a eu pour résultat que les positions sont identiques, et
- poursuite de l'opération de fermeture lorsque la valeur de comptage est égale à la valeur prédéfinie, le point de difficulté de mouvement détecté étant compensé par une compensation partielle au moyen d'une valeur de compensation en se basant sur la valeur de l'amplitude (A).

2. Procédé selon la revendication 1, **caractérisé en ce que** lorsqu'il se produit une difficulté de mouvement, le procédé se poursuit avec une constante de rappel élevée, notamment d'approximativement 65 N/mm.

3. Procédé selon l'une des revendications précédentes, **caractérisé par** un effacement des valeurs mémorisées de la position et de l'amplitude de la première difficulté de mouvement lorsque, lors d'une nouvelle opération de fermeture, aucune difficulté de mouvement n'a plus lieu à l'endroit de la première difficulté de mouvement.

4. Procédé selon la revendication 1 ou 2, **caractérisé par** une compensation immédiate d'une difficulté de mouvement avec la valeur de compensation lorsque, lors d'une nouvelle opération de fermeture, une difficulté de mouvement se produit de nouveau à la position de la première difficulté de mouvement.

5. Procédé selon l'une des revendications précédentes, **caractérisé en ce que** le procédé peut être activé ou désactivé par un signal externe.

6. Dispositif de protection contre les situations d'écrasement, comprenant un moteur, une unité de détection pour détecter une situation d'écrasement, une unité de commande et un compteur, le dispositif étant configuré pour mettre en oeuvre le procédé selon l'une des revendications précédentes.
